# EUROPEAN PATENT SPECIFICATION

(11) **EP 1 959 697 B1**
(45) Date of publication and mention of the grant of the patent: **25.01.2012**
(21) Application number: 07290217.4
(22) Date of filing: 19.02.2007
(51) Int. Cl.: H04W 36/00

(54) **A method of providing information about radio access possibilities**
Verfahren zur Bereitstellung von Informationen über Funkzugangsmöglichkeiten
Procédé pour fournir des informations sur les possibilités d'accès radio

(43) Date of publication of application: 20.08.2008
(73) Proprietor: Alcatel Lucent, 75008 Paris (FR)
(72) Inventor: Karla, Ingo Dr., 46514 Schermbeck (DE); Sigle, Rolf, Dipl.-Ing, 73630 Remshalden (DE)
(74) Representative: Schmidt, Werner Karl

(56) References cited:
- EP-A2- 1 246 487
- GB-A- 2 410 153
- US-A1- 2004 218 605

## Description

### Field of the invention

The invention relates to a method of providing information about radio access possibilities of a mobile terminal to other mobile terminals, to a mobile terminal, to an anchor point, and to a telecommunications network.

### Background and related art

A wireless telecommunications network, also referred to as wireless communication network, provides access for and communicates with a mobile terminal via a base station which provides radio coverage for the cell of the telecommunications network in which the mobile terminal resides. The term mobile terminal refers to mobile devices which are adapted to connect to wireless networks, e.g. cell phones, laptops, PCs, etc.

From a mobile terminals point of view, the telecommunications network provides a radio access possibility for the mobile terminal through which the mobile terminal is able to connect to the network, to communicate for example with other fixed or mobile terminals, or to browse the internet. The term 'radio access possibility' is referred here as a wireless communication technology or service which provides access to a network for a mobile terminal.

Once the mobile terminal is connected to the telecommunications network, it uses a particular service provided by the telecommunications network. Another telecommunications network which might in principle be available for the mobile terminal might however provide a service which could be of interest for the mobile terminal, for example the same service with a better quality or at a cheaper price. The mobile terminal might however not get notice about this access possibility.

The base stations of some telecommunications providers send information about possible alternative radio access possibilities for the mobile terminal they serve. The alternative radio access possibilities are however usually limited to the ones of the network operator.

The document GB 2 410 153 A discloses a collaborative discovery method that can be used by a plurality of communication devices, wherein network service information discovered by any device of the plurality is made available for sharing with and discovering by at least one other device of the plurality by transmitting the network service information wirelessly to the at least one other device, wherein the network service information relates to at least one of a network over which a device of the plurality can communicate and a service which a device of the plurality can use. The network service information comprises network configuration data relating to a network that enables a device to be configured to communicate over the network.

The document US 2004/218605 A1 disclosed a method for selecting the best access for terminals in IP-based multi-access communication systems.

### Summary of the invention

It is an object of the invention to provide a method of providing information about radio access possibilities according to claim 1. It is another object of the invention to describe a mobile terminal that is adapted to provide information about radio access possibilities to other mobile terminals and that is adapted to employ the information about radio access possibilities received from other terminals according to claim 6.

According to a first aspect of the invention, there is provided a method of providing information about radio access possibilities, wherein the method is performed by a first mobile terminal. In accordance with an embodiment of the invention, the method comprises the step of collecting first information about a first set of radio access possibilities. The first set of radio access possibilities comprises the radio access possibilities which are currently available for the first mobile terminal. In a further step, the first information about the first set of radio access possibilities is transmitted in order to provide the first information to other mobile terminals.

According to this embodiment of the invention, the first mobile terminal collects first information about the radio access possibilities that provide radio coverage at the location of the first mobile terminal and that can be detected by the first mobile terminal. The radio access possibilities might for example relate to a GSM network, to a UMTS network, or to WLAN or Wimax access points. The first information relating to the first set of radio access possibilities might provide the type of each radio access possibility comprised in the first set of radio access possibilities, the price, the quality, the transmission power, the location, the provider name, and so on.

The other mobile terminals might therefore receive information of possible other access technologies or networks not announced to them by their providers. This provides some independence to the mobile terminals with respect to their providers in the selection of possible access technologies or telecommunications networks, as a mobile terminal which might be connected to a particular network can use the first information in order to select another radio access possibility, for example a radio access possibility which provides a service at a cheaper price or at a higher data rate or quality, which might not be advertised by the serving network to this mobile terminal for a handover.

In accordance with an embodiment of the invention, the method further comprises the step of receiving second information by the first mobile terminal about a second set of radio access possibilities. The second set of radio access possibilities comprises the radio access possibilities which are currently available for a second mobile terminal. The second mobile terminal collects second information about the second set of radio access possibilities which comprises the radio access possibilities that are available for the second mobile terminal and transmits the second information in order to provide the second information to other mobile terminals, such that the first mobile terminal is able to receive the second information.

In this way, the first mobile terminal obtains information about possible alternative radio access technologies at its location or near to its location even if these radio access possibilities are not advertised or not known to the operator's network to which the first mobile terminal is currently connected. As mentioned before, the second information might similarly as the first information relate to the newly detected radio access possibilities, such as WLAN or Wimax access points, good cell sites that were not already included into the original search list provided by the operators' network to the first mobile terminal, nearby access opportunities which could be reached when the user of the first mobile terminal relocates and the second information might a!so comprise possible load, cost and other performance indications of the radio access possibilities of the second set of radio access possibilities.

In accordance with an embodiment of the invention, the first mobile terminal evaluates the first information and/or the second information and considers a radio access possibility from the first set of radio access possibilities and/or from the second set of radio access possibilities as a new access possibility. The first mobile terminal therefore decides to which of the first and/or second radio access possibilities it wants to perform a handover. In a further step, the first mobile terminal initiates a handover from an initial radio access possibility to the selected radio access possibility, wherein the initial radio access possibility is currently employed by the first mobile terminal. Alternatively, the mobile terminal requests the network providing the initial radio access possibility to support a handover to the selected radio access possibility.

The second information from the second mobile terminal might be used by the first mobile terminal to select one radio access possibility from the radio access possibilities comprised in the second set of radio access possibilities. The selected radio access possibilities is then considered as a new access possibility which is better suited than the initial radio access possibility. The first mobile terminal initiates then itself a handover from the initial radio access possibility to the selected radio access possibility and requests the network providing the initial radio access possibility to perform the handover. The handover could be supported by some functionality in the network, e.g., by a network component such as a mobility anchor point in the network which supports keeping the ongoing connection alive, maybe even seamlessly.

Alternatively, the first mobile terminal can disconnect the connection to the initial radio access possibility and attach to the selected radio access possibility. In this case all ongoing sessions may be stopped. An anchor point located between the network which provides the initial radio access possibility and the network which provides the selected radio access possibility might provide support for applications running on the first mobile terminal in a way that the applications can be further executed by the first mobile terminal after the first mobile terminal has connected to the selected radio access possibility. For example, if the user of the first mobile terminal is currently surfing the Internet via a web browser and reading a page, the anchor point could support the web browser so that the user can further read the page and navigate through the internet after the attachment has taken place.

In accordance with an embodiment of the invention, the first mobile terminal further transmits the second information in order to provide the second information to other mobile terminals. This provides the advantage that a further mobile terminal obtains knowledge about the second set of radio access possibilities available for the second mobile terminal via the first mobile terminal.

In accordance with an embodiment of the invention, the first mobile terminal sends the first information and/or the second information to a first telecommunications network, wherein the first telecommunications network provides an initial access possibility to the first mobile terminal. In a further step, the first mobile terminal requests the first telecommunication network to consider radio access possibilities of the first set of radio access possibilities and/or of the second set of radio access possibilities as possible candidates for a handover.

After having obtained the second information about the second set of radio access possibilities, the first mobile terminal reports the second information along with the first information to the first telecommunications network which controls the first mobile terminal as it currently provides the initial access possibility to the first mobile terminal. The first telecommunications network is then requested to consider one radio access possibility of the first and/or second set of radio access possibilities as a candidate for a handover.

The selection of new candidates for handover is thus left to the first telecommunications network and hence to the operator that currently provides radio access to the telecommunications network. This provides the advantage that the operator gets control over the radio access technologies which are used by the user of the first mobile terminal and to which the user will switch when being connected to the operator's network. This might open the way to new business models and allow the operators to gain revenues as they can select their own radio access technologies when comprised in the second set of radio access possibilities.

In accordance with an embodiment of the invention, the first information is transmitted from the first mobile terminal to the second mobile terminal via a direct connection. The connection might be unidirectional or bidirectional.

In accordance with an embodiment of the invention, the second information is transmitted from the second mobile terminal to the first mobile terminal via a direct connection. This connection might also be a unidirectional connection. Alternatively, the connection is bidirectional so that the first and second information are exchanged via a direct wireless connection between the first and second mobile terminals, for example by use of Bluetooth (IEEE 802.15.1), or WLAN (IEEE 802.11). A direct connection provides the advantage that the first and/or second information is provided from a mobile terminal to another mobile terminal which are relatively close to each other and hence, there is a large probability that the first set of radio access possibilities detected by the first mobile terminal is also available for the second mobile terminal.

In accordance with an embodiment of the invention, the first information is transmitted by the first mobile terminal to the first telecommunications network and the first telecommunications network forwards the first information to a second telecommunications network. The second telecommunications network transmits the first information to the second mobile terminal which is served by the second telecommunications network. The first information is thus not transmitted directly to the second mobile terminal but via the first telecommunications network which is serving the first mobile terminal and via the second telecommunications network which is serving the second mobile terminal.

In accordance with an embodiment of the invention, the second information is transmitted by the second mobile terminal to the second telecommunications network from where it is transmitted to the first telecommunications network which transmits the second information to the first telecommunications network.

The first and second telecommunications networks could be identical, thus the same operator might provide radio access to the first and second mobile terminal. The first mobile terminal and/or the second mobile terminal could for example send the first/second information via multicast messages to other local mobile terminals or alternatively the base stations of the telecommunications network that serve the first or second mobile terminals could add the first or second information obtained from the mobile terminals into their broadcast list of handover candidates information. This ensures that mobile terminals get information about alternative access technologies in their vicinity.

In accordance with an embodiment of the invention, the first mobile terminal selects a radio access possibility from the second set of radio access possibilities and/or from the first set of radio access possibilities, wherein the selected radio access possibility is considered as a new access possibility by the first mobile terminal, and wherein the selected radio access possibility is available for the second mobile terminal at a location. In a further step, the first mobile terminal informs its user about the availability of the radio access possibility at this location. After the user of the first mobile terminal has obtained information about a nearby, good radio access possibility, the user could choose to relocate a little bit to move into the coverage of that good radio access possibility. For example, when a user, who is surfing the internet via UMTS receives by Bluetooth from the second mobile terminal the information that a cheap WLAN access is nearby, he/she may choose to relocate some meters to be able to use that much better suited radio access opportunity. In that sense, the users benefit from having the choice from a larger pool of possible radio access possibilities (the radio access possibilities comprised in the second set of radio access possibilities) from which the best suited one can then be selected. This pool can in principle consist of any possible radio access possibility and is no longer limited to the ones offered by a certain single network operator as the information about the available radio access possibilities is provided by other mobile terminals and not directly by the network. The user can then for example choose the access possibility with the highest data rate or the one with the lowest price. The user may also be very satisfied when he gets the knowledge about a better suited radio access possibility in close vicinity so that he just must relocate a little bit. This increases the user's satisfaction and might allow the network operators which support such features to increase its number of users and subscribers.

In accordance with an embodiment of the invention, the second information received about the radio access possibilities comprised in a second set of radio access possibilities is made available and/or displayed by the first mobile terminal to the user of the first mobile terminal. This enables the user of the first mobile terminal to have full control over the selection of the available radio access possibilities. Hence the user can select one radio access possibility from the second set of radio access possibilities and switch, e.g., manually, to the selected radio access possibility.

In a second aspect of the invention, there is provided a mobile terminal. In accordance with an embodiment of the invention, the mobile terminal relates to a first mobile terminal and comprises means for collecting first information about a first set of radio access possibilities. The first set of radio access possibilities comprises radio access possibilities which are currently available for the first mobile terminal. The mobile terminal further comprises means for transmitting the first information about the first set of radio access possibilities in order to provide the first information to at least one second mobile terminal.

According to a third aspect of the invention, there is provided an anchor point with means for receiving a request for a handover of a first mobile terminal to a selected radio access possibility of a set of radio access possibilities. The set of radio access possibilities has been provided to the first mobile terminal by a second mobile terminal and the set of radio access possibilities comprises the radio access possibilities that are currently available for the second mobile terminal. The anchor point has also means for supporting the handover from an initial radio access possibility to the selected radio access possibility. As mentioned above, the first mobile terminal might itself select a radio access possibility from the second set of radio access technologies. The selected radio access possibility is then considered as new target radio access possibility to which the first mobile terminal wants to be handed over to. The switching to the selected radio access possibility is supported by an anchor point which keeps the ongoing connection alive, maybe even seamlessly. The anchor point might be located in the telecommunications network serving the first mobile terminal or in between the serving telecommunications network and the target telecommunications network providing the selected radio access possibility. Thus, the anchor point might be located in the internet through which both telecommunications networks are connected.

In accordance with an embodiment of the invention, the anchor point links a first telecommunications network providing the initial radio access possibility with a second telecommunications network: The first telecommunications network thus serves the first mobile terminal and the second telecommunications network serves the second mobile terminal. The anchor point comprises means for receiving first information about a first set of radio access possibilities from the first mobile terminal. The first set of radio access possibilities comprises thereby the access possibilities which are available for the first mobile terminal. The anchor point further comprises means for forwarding the first information to the second mobile terminal via the second telecommunications network.

In accordance with an embodiment of the invention, the anchor point corresponds to a network component comprised in the first telecommunications network or in the second telecommunications network. In particular, the anchor point is located in the core network of the first or second telecommunications network.

In accordance with an embodiment of the invention, the anchor point is located in the internet connecting the first and second telecommunications networks.

According to a fourth aspect of the invention, there is provided a telecommunications network. The telecommunications network has means for receiving first and/or second information about a first and/or second set of radio access possibilities from a first mobile terminal. The radio access possibilities of the first set of radio access possibilities being currently available for the first mobile terminal. The radio access possibilities of the second set of radio access possibilities being currently available for a second mobile terminal, wherein the second mobile terminal has provided the second information to the first mobile terminal either via a direct connection to the first mobile terminal or via the telecommunication network, and wherein the telecommunications network serves the first mobile terminal via an initial access possibility. The telecommunications network further comprises means for receiving a request from the first mobile terminal through which the telecommunications network is asked to perform or to support a handover the first mobile terminal from the initial access possibility to a target radio access possibility, wherein the target radio access possibility is comprised in the first and/or second set of radio access possibilities. Furthermore, the telecommunications network comprises means for selecting a radio access possibility from the first and/or second set of radio access possibilities by use of the second information, wherein the radio access possibility is a possible candidate for a handover of the first mobile terminal from the initial access possibility to the selected radio access possibility.

### Brief description of the drawings

In the following preferred embodiments of the invention will be described in greater detail by way of example only making reference to the drawings in which:
- Figure 1: shows schematically first and second mobile terminals having access to several radio access possibilities,
- Figure 2: is a flowchart of an embodiment of the method in accordance with the present invention,
- Figure 3: shows schematically a block diagram of first and second telecommunications networks serving a first and second mobile terminal, respectively, and
- Figure 4: shows schematically a block diagram of a first and second mobile terminal, wherein the first mobile terminal provides information about a hotspot to the second mobile terminal.

### Detailed description

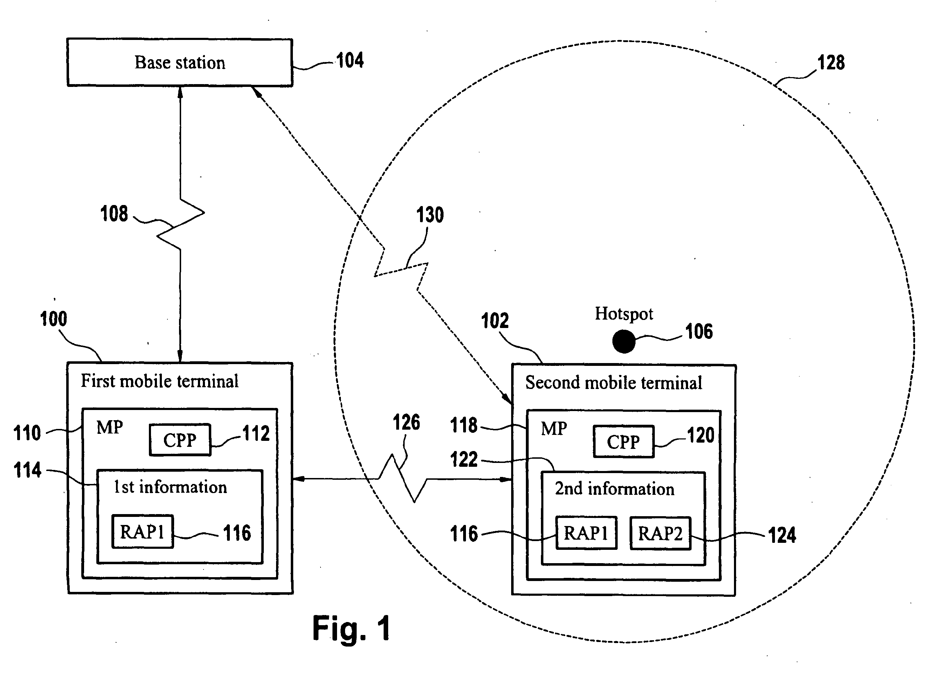

Fig. 1 shows schematically a first mobile terminal 100 which is served by a base station 104 of a telecommunications network and a second mobile terminal 102 which is connected to a hotspot 106. The hotspot 106 can for example relate to a WLAN-access-point through which access to the public internet is provided to the second mobile terminal 102. The hotspot 106 has a radio coverage area 128.

The base station 104 provides access for the first mobile terminal 100 to the telecommunications network, e.g., to a UMTS network. For this, the base station 104 holds a connection 108 to the mobile terminal 100.

The first mobile terminal 100 comprises a microprocessor 110 which executes a computer program product 112. The computer program product 112 is permanently stored on the first mobile terminal 100 and loaded into the microprocessor 110, e.g., during the initialization phase of the first mobile terminal 100.

In operation, the computer program product 112 instructs the first mobile terminal 100 to detect the radio access possibilities that are available for the first mobile terminal 100, e.g., by listening to beacon signals emitted by base stations, hotspots, etc., and to collect first information 114 about the detected available radio access points of the first mobile terminal 100. In the following, it is considered that the base station 104 provides the only available radio access possibility for the mobile terminal 100. The first information 114 therefore comprises information 116 about this radio access possibility, referred to as radio access possibility 1 (RAP1). The information 116 might relate to the type of the radio access possibility (here UMTS, see above), the provider name, the price, the available transmission power, etc. As the first mobile terminal 100 resides in the outside of the coverage area 128 of the hotspot 106, it will not get notice of the presence of the hotspot 106, even if it is in relatively close vicinity of the first mobile terminal 100.

Furthermore, the computer program product 112 initiates the transmission of the first information 114 in order to provide the first information 114 to other mobile terminals, such as the second mobile terminal 102. The transmission can be performed by establishing a connection 126 (for example a Bluetooth connection) between the first mobile terminal 100 and the second mobile terminal 102 so that the first information 114 can be transferred from the first mobile terminal 100 to the second mobile terminal 102. The connection 126 can be a unidirectional connection or a bidirectional connection.

The second mobile terminal 102 also comprises a microprocessor 118 which executes a computer program product 120. The computer program product 120 is permanently stored on the second mobile terminal 102 and loaded into the microprocessor 118, e.g., during the startup phase of the second mobile terminal 102 after it has been switched on.

In operation, the computer program product 120 causes the second mobile terminal 102 to collect second information 122 about radio access possibilities that are currently available for the second mobile terminal 102. As the second mobile terminal 102 is currently connected with the hotspot 106, it has detailed information 124 about this radio access possibility, which is referred to as radio access possibility 2 (RAP 2) in order to distinguish it from RAP 1.

The second mobile terminal 102 might also be able to detect the beacon signal emitted by the base station 104 and therefore might get notice of the radio access possibility 1 provided by the base station 104. The information 116 obtained via, e.g., the beacon signal about this radio access possibility 1 might correspond to the information obtained by the mobile terminal 1 and thus the identical reference numeral is assigned to the information. The degree of detail in the information 116 provided by the first and second mobile terminals 100, 102 might however vary.

The second information 122 comprising information 116 and 124 is transmitted via the connection 126 from the second mobile terminal 102 to the first mobile terminal 100. Since the first information 114 has already been sent via the connection 126, the connection 126 is according to this example a bidirectional connection. However, the second information 122 can alternatively be transferred via a separate unidirectional connection established from the second mobile terminal 102 to the first mobile terminal 100.

The first mobile terminal 100 receives the second information 122 and therefore gets information 116, 124 about radio access possibilities (RAP 1, RAP 2) that are available for the second mobile terminal 102.

The computer program product 112 can be adapted to analyze the second information 122 and thus determine that the information about the radio access point 1 116 relates to the radio access point provided by the base station 104. Further the computer program product 112 can inform the user about the availability of the hotspot 106 at the location of the second mobile terminal 102 when this information is provided in the information relating to the radio access point 2 124. The user might then choose to move into the coverage area 128 and the user might then manually switch from the radio access possibility provided by the base station 104 to the radio access possibility provided by the hotspot 106. Alternatively, the user might request from the network to assist the handover procedure from the radio access possibility provided by the base station 104 to the radio access possibility provided by the hotspot 106.

It has been assumed so far that the second mobile terminal 102 is connected to the hotspot 106. It might also well be that the second mobile terminal 102 is disconnected from the hotspot 106 and holds an active connection 130 with the base station 104. The second mobile terminal 102 detects then the hotspot 106 through a beacon signal emitted by the hotspot. The information 124 is then collected by the second mobile terminal 102 by use of the beacon signal. The second mobile terminal 102 is then able to sent the second information 122 comprising information 116 and 124 in a multicast message to other local mobile terminal via the base station 104 so that the first mobile terminal 100 will receive the second information 122 via the base station. Alternatively, the second information 122 could by given to the base station 104 via connection 130 and the base station 104 could include the information 116, 124 obtained from the second mobile terminal 102 into a broadcast list of handover candidates which is sent by the base station 102 to the served mobile terminals on a regular basis.

Hence, the mobile terminal 100 can obtain the second information 122 directly from the mobile terminal via connection 126 or indirectly via the serving base station 104.

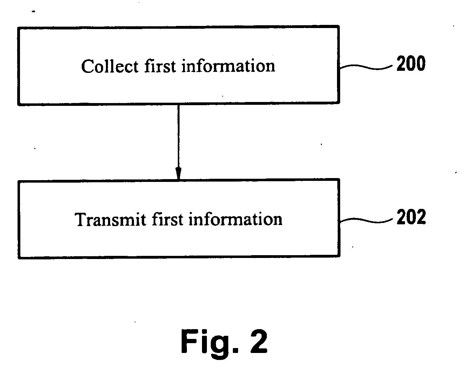

Fig. 2 is a flowchart of an embodiment of the method in accordance with the present invention. The method in accordance with the invention comprises step 200, in which first information about a first set of radio access possibilities is collected, wherein the first set of radio access possibilities comprises the radio access possibilities which are currently available for the first mobile terminal. In step 202, the first information about the first set of radio access possibilities is transmitted by the first mobile terminal in order to provide the first information to a second mobile terminal.

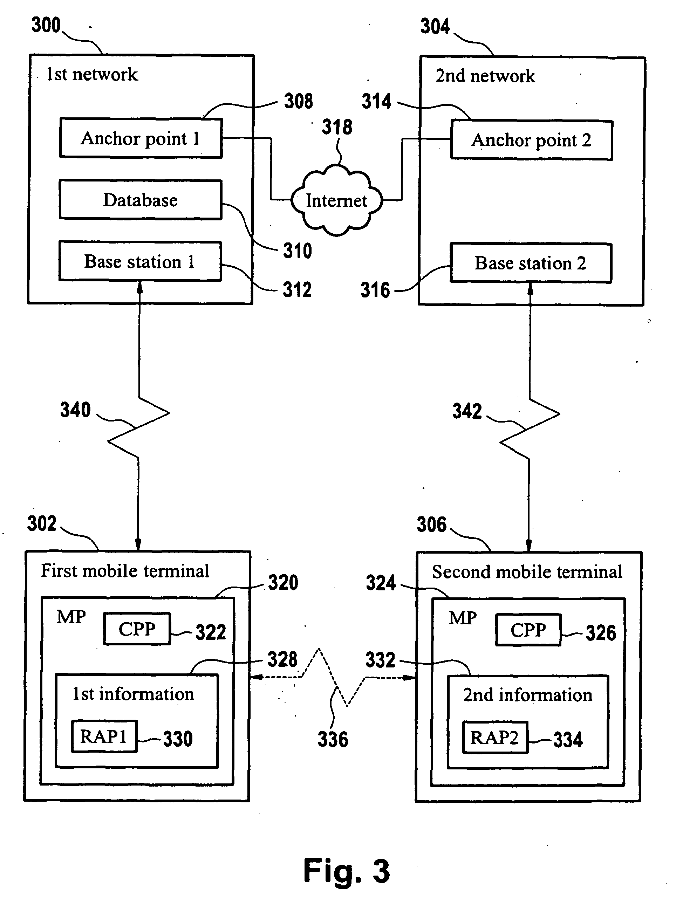

Fig. 3 shows schematically a block diagram of a first telecommunications network 300 serving a first mobile terminal 302 via an active connection 340 and of a second telecommunications network 304 serving a second mobile terminal 306 via an active connection 342. The first telecommunications network 300 comprises an anchor point 308, a database 310, and a base station 312. The base station 312 and the database 310 are components of an access network of the first telecommunications network 300, whereas the anchor point 308 is a component of a core network of the telecommunications network 300. The second telecommunications network 304 comprises also an anchor point 314 and a base station 316. The anchor point 314 is located in the core network of the second telecommunications network 304, whereas the base station 316 is located in the access network of the second telecommunications network 304. The anchor point 308 is connected via the (public) internet 318 to the anchor point 314 so that data can be exchanged between the first and second telecommunications networks 300, 304.

The first mobile terminal 302 comprises a microprocessor 320 which executes a computer program product 322. The second mobile terminal 306 also comprises a microprocessor 324 which also executes a computer program product 326.

In operation, the computer program product 322 of the first mobile terminal causes the first mobile terminal 302 to collect first information 328 about radio access possibilities that are currently available for the first mobile terminal 302. In the following it is assumed that the first mobile terminal 302 is only able to detect the first network 300 as available radio access possibility although the base station 316 is in close vicinity to the first mobile terminal 302. Thus, the first mobile terminal 302 is only able to collect information 330 about the radio access possibility (RAP 1) provided by the first telecommunications network 300.

The first mobile terminal 302 might then send the information 328 comprising the information 330 to the first telecommunications network 300 where it is stored in the database 310. Before the base station 312 sends a broadcast list of possible handover candidates to the mobile terminals it serves, the base station 312 accesses the database and includes the information 328 into the broadcast list so that the served mobile terminals (not shown in Fig. 3) obtain the information 328.

Furthermore, the first mobile terminal 302 can send the first information 328 to the first network 300, wherein the anchor point 308 is adapted to forward the first information to the second anchor point 314 which further processes the first information 328 to the base station 316 which broadcasts the first information 328 to the mobile terminals served by the base station 316. Hence, the second mobile 306 obtains the first information 328 via the networks 300 and 304.

The second mobile terminal 306 also executes a computer program product 326. The computer program product 326 further causes the second mobile terminal 306 to collect second information 332 relating to the radio access possibilities which are currently available to the second mobile terminal 306. The collected information 332 comprising information 334 about the radio access possibility (RAP 2) provided by the second network 304 is transmitted by the second mobile terminal 306 to the first mobile terminal 302 via a Bluetooth connection 336 which is established for this purpose between the two mobile terminals.

The first mobile terminal 302 thus gets knowledge about the availability of the second telecommunications network 304 because of the information 334 and might consider to request a handover from the first telecommunications network 300 to the second telecommunications network 304. For this, the mobile terminal 302 sends a request to the anchor point 308 which is adapted to support, e.g., a seamless handover of the mobile terminal 302 from the first telecommunications network 300 to the second telecommunications network 304.

Instead of having the anchor points 308 and 314 located in the networks 300 and 302, one or more anchor points could be located in the internet 318. The anchor points would then be more or even completely radio access network provider independent and could for example be made accessible all radio access network operators.

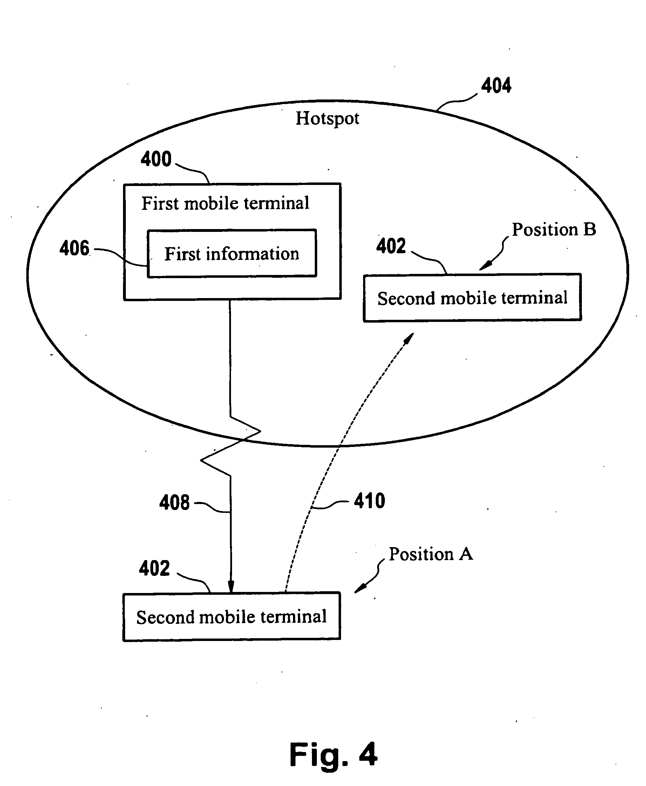

Fig. 4 shows schematically a block diagram of a first mobile terminal 400 and a second mobile terminal 402. Initially, the second mobile terminal 402 is located at position A, outside the coverage area 404 of a hotspot. The first mobile terminal 400 is located inside the coverage area 404 of the hotspot.

In operation, the first mobile terminal 400 collects first information 406 about the hotspot and transmits the first information 406 via a connection 408 to the second mobile terminal 402. The connection 408 might for example be a Bluetooth connection extra established between the two terminals for the transmission of the first information 406.

The second mobile terminal 402 receives the first information (which comprises information about the location of the first mobile terminal 406) and informs its user about the possibility of the hotspot at the location of the first mobile terminal 400. In response to this notice, the user of the second mobile terminal 102 moves along the path 410 in order to relocate himself to position B, a location in the vicinity of the location of the first mobile terminal 400. The user of the second mobile terminal 402 is then able to connect to the hotspot and use the services provided by the hotspot.

### List of Reference Numerals

| | |
|---|---|
| 100 | First mobile terminal |
| 102 | Second mobile terminal |
| 104 | Base station |
| 106 | Hotspot |
| 108 | Connection |
| 110 | Microprocessor |
| 112 | Computer program product |
| 114 | First information |
| 116 | Information about radio access possibility |
| 118 | Microprocessor |
| 120 | Computer program product |
| 122 | Second information |
| 124 | Information about radio access possibility |
| 126 | Connection |
| 128 | Coverage area |
| 130 | Connection |
| 300 | First telecommunications network |
| 302 | First mobile terminal |
| 304 | Second communications network |
| 306 | Second mobile terminal |
| 308 | Anchor point |
| 310 | Database |
| 312 | Base station |
| 314 | Anchor point |
| 316 | Base station |
| 318 | Internet |
| 320 | Microprocessor |
| 322 | Computer program product |
| 324 | Microprocessor |
| 326 | Computer program product |
| 328 | First information |
| 330 | Information about radio access possibility |
| 332 | Second information |
| 334 | information about radio access possibility |
| 336 | Connection |
| 340 | Connection |
| 342 | Connection |
| 400 | First mobile terminal |
| 402 | Second mobile terminal |
| 404 | Coverage area of hotspot |
| 406 | First information |
| 408 | Connection |
| 410 | Path |

## Claims

1. A method of providing information (114, 122) about radio access possibilities (104, 106), the method being performed by a first mobile terminal (100), the method comprising:
- collecting first information (114) about a first set of radio access possibilities (104), the first set of radio access possibilities comprising the radio access possibilities which are currently available for the first mobile terminal (100);
- transmitting the first information (114) about the first set of radio access possibilities in order to provide the first information (114) to other mobile terminals;
- receiving second information (122) about a second set of radio access possibilities (104, 106), the second set of radio access possibilities comprising the radio access possibilities which are currently available for a second mobile terminal (102); **characterized in that**, the method further comprises the steps of:
- selecting a radio access possibility (106) from the second set of radio access possibilities, the radio access possibility being considered as a new access possibility by the first mobile terminal (100), the radio access possibility (106) being currently available for the second mobile terminal (102) at the location of the second mobile terminal (102);
- informing the user of the first mobile terminal (100) about the availability and about the location of the radio access possibility (106) at the location of the second mobile terminal (102) to enable the user of the first mobile terminal (100) to relocate himself towards the vicinity of the location of the second mobile terminal (102) in order to move into the coverage area of the radio access possibility (106), the radio access possibility (106) being a hotspot.

2. The method of claim 1, further comprising:
- selecting a radio access possibility (106) from the second set of radio access possibilities (104, 106) being considered as a new access possibility by the first mobile terminal;
- initiating a handover from an initial radio access possibility (104) to the radio access possibility (106), the initial radio access possibility being currently employed by the first mobile terminal.

3. The method of claim 1, further comprising:
- sending the first and/or second information (114, 122) to a first telecommunications network, the first telecommunications network providing an initial access possibility to the first mobile terminal;
- requesting the first telecommunications network for considering radio access possibilities of the first and/or second set of radio access possibilities as possible candidates for a handover from the initial radio access possibility to one radio access possibility of the second set of radio access possibilities.

4. The method of claim 3, wherein the first information is transmitted from the first mobile terminal to the second mobile terminal via a direct connection, and/or wherein the second information is received by the first mobile terminal from the second mobile terminal via the connection, and/or wherein the first information is transmitted to the first telecommunications network, wherein the first telecommunications network forwards the first information to a second telecommunications network, wherein the second telecommunications network transmits the first information to the second mobile terminal, wherein the second mobile terminal is served by the second telecommunications network.

5. The method of claim 1, wherein the first information and/or the second information comprise information about the type, and/or price, and/or quality, and/or transmission power, and/or location, and/or quality of service, and/or channel quality, and/or load, and/or identifiers of each access possibility of the first and/or second sets of access possibilities.

6. A mobile terminal (100), the mobile terminal relating to a first mobile terminal, the first mobile terminal comprising:
- means for collecting first information (114) about a first set of radio access possibilities, the first set of radio access possibilities comprising radio access possibilities being currently available for the first mobile terminal (100);
- means for transmitting the first information (114) about the first set of radio access possibilities in order to provide the first information (114) to at least one second mobile terminal (102);
- means for receiving second information (122) about a second set of radio access possibilities (104, 106), the second set of radio access possibilities comprising the radio access possibilities which are currently available for a second mobile terminal (102); **characterized in that** the first mobile device further comprises :
- means for selecting a radio access possibility from the second set of radio access possibilities (106), the radio access possibility being considered as a new access possibility by the first mobile terminal (100), the radio access possibility being currently available for the second mobile terminal (102) at the location of the second mobile terminal (102);
- means for informing the user of the first mobile terminal (100) about the availability and about the location of the radio access possibility (106) at the location of the second mobile terminal (102) to enable the user of the first mobile terminal (100) to relocate himself towards the vicinity of the location of the second mobile terminal (102) in order to move into the coverage area of the radio access possibility (106), the radio access possibility (106) being a hotspot.

## Patentansprüche

1. Verfahren zur Bereitstellung von Informationen (114, 122) über Funkzugangsmöglichkeiten (104, 106), wobei das Verfahren von einem ersten mobilen Endgerät (100) durchgeführt wird, wobei das Verfahren umfasst:
- Erfassen von ersten Informationen (114) über einen ersten Satz von Funkzugangsmöglichkeiten (104), wobei der erste Satz von Funkzugangsmöglichkeiten diejenigen Funkzugangsmöglichkeiten umfasst, die momentan für das erste mobile Endgerät (100) verfügbar sind;
- Übertragen der ersten Informationen (114) über den ersten Satz von Funkzugangsmöglichkeiten, um die ersten Informationen (114) an andere mobile Endgeräte bereitzustellen;
- Empfangen von zweiten Informationen (122) über einen zweiten Satz von Funkzugangsmöglichkeiten (104, 106), wobei der zweite Satz von Funkzugangsmöglichkeiten diejenigen Funkzugangsmöglichkeiten umfasst, die momentan für ein zweites mobiles Endgerät (102) verfügbar sind, **dadurch gekennzeichnet, dass** das Verfahren weiterhin die folgenden Schritte umfasst:
- Auswählen einer Funkzugangsmöglichkeit (106) aus dem zweiten Satz von Funkzugangsmöglichkeiten, wobei die Funkzugangsmöglichkeit von dem ersten mobilen Endgerät (100) als eine neue Funkzugangsmöglichkeit betrachtet wird, wobei die Funkzugangsmöglichkeit (106) momentan für das zweite mobile Endgerät (102) am Aufenthaltsort des zweiten mobilen Endgeräts (102) verfügbar ist;
- Informieren des Benutzers des ersten mobilen Endgeräts (100) über die Verfügbarkeit und über den Ort der Funkzugangsmöglichkeit (106) am Aufenthaltsort des zweiten mobilen Endgeräts (102), so dass sich der Benutzer des ersten mobilen Endgeräts (100) in die Nähe des Aufenthaltsorts des zweiten mobilen Endgeräts (102) begeben kann, um in den Abdeckungsbereich der Funkzugangsmöglichkeit (106) zu wechseln, wobei die Funkzugangsmöglichkeit (106) ein Hot Spot ist.

2. Verfahren nach Anspruch 1, weiterhin umfassend:
- Auswählen einer Funkzugangsmöglichkeit (106) aus dem zweiten Satz von Zugangsmöglichkeiten (104, 106), welche von dem ersten mobilen Endgerät als eine neue Zugangsmöglichkeit betrachtet wird;
- Initiieren eines Handovers von einer anfänglichen Funkzugangsmöglichkeit (104) an die Funkzugangsmöglichkeit (106), wobei die anfängliche Zugangsmöglichkeit momentan von dem ersten mobilen Endgerät benutzt wird.

3. Verfahren nach Anspruch 1, weiterhin umfassend:
- Senden der ersten und/oder zweiten Informationen (114, 122) an ein erstes Telekommunikationsnetzwerk, wobei das erste Telekommunikationsnetzwerk eine anfängliche Zugangsmöglichkeit an das erste mobile Endgerät bereitstellt;
- Auffordern des ersten Telekommunikationsnetzwerks, Funkzugangsmöglichkeiten des ersten und/oder zweiten Satzes von Funkzugangsmöglichkeiten als mögliche Kandidaten für ein Handover von der anfänglichen Funkzugangsmöglichkeit an eine Funkzugangsmöglichkeit des zweiten Satzes von Zugangsmöglichkeiten zu betrachten.

4. Verfahren nach Anspruch 3, wobei die ersten Informationen über eine direkte Verbindung von dem ersten mobilen Endgerät an das zweite mobile Endgerät übertragen werden, und/oder wobei die zweiten Informationen über die Verbindung von dem zweiten mobilen Endgerät an dem ersten mobilen Endgerät empfangen werden, und/oder wobei die ersten Informationen an das erste Telekommunikationsnetzwerk übertragen werden, wobei das erste Telekommunikationsnetzwerk die ersten Informationen an ein zweites Telekommunikationsnetzwerk weiterleitet, wobei das zweite Telekommunikationsnetzwerk die ersten Informationen an das zweite mobile Endgerät überträgt, wobei das zweite mobile Endgerät von dem zweiten Telekommunikationsnetzwerk bedient wird.

5. Verfahren nach Anspruch 1, wobei die ersten Informationen und/oder die zweiten Informationen Informationen über den Typ, und/oder den Preis, und/oder die Qualität, und/oder die Übertragungsleistung, und/oder den Aufenthaltsort, und/oder die Dienstgüte, und/oder die Kanalqualität, und/oder die Last, und/oder über Kennungen einer jeden Zugangsmöglichkeit des ersten und/oder zweiten Satzes von Zugangsmöglichkeiten enthalten.

6. Mobiles Endgerät (100), wobei sich das mobile Endgerät auf ein erstes mobiles Endgerät bezieht, wobei das erste mobile Endgerät umfasst:
- Mittel zum Erfassen von ersten Informationen (114) über einen ersten Satz von Funkzugangsmöglichkeiten, wobei der erste Satz von Funkzugangsmöglichkeiten diejenigen Funkzugangsmöglichkeiten umfasst, die momentan für das erste mobile Endgerät (100) verfügbar sind;
- Mittel zum Übertragen der ersten Informationen (114) über den ersten Satz von Funkzugangsmöglichkeiten, um die ersten Informationen (114) an mindestens ein zweites mobiles Endgerät (102) bereitzustellen;
- Mittel zum Empfangen von zweiten Informationen (122) über einen zweiten Satz von Funkzugangsmöglichkeiten (104, 106), wobei der zweite Satz von Funkzugangsmöglichkeiten diejenigen Funkzugangsmöglichkeiten umfasst, die momentan für ein zweites mobiles Endgerät (102) verfügbar sind, **dadurch gekennzeichnet, dass** das erste mobile Gerät weiterhin umfasst:
- Mittel zum Auswählen einer Funkzugangsmöglichkeit aus dem zweiten Satz von Funkzugangsmöglichkeiten (106), wobei die Funkzugangsmöglichkeit von dem ersten mobilen Endgerät (100) als eine neue Funkzugangsmöglichkeit betrachtet wird, wobei die Funkzugangsmöglichkeit momentan für das zweite mobile Endgerät (102) am Aufenthaltsort des zweiten mobilen Endgeräts (102) verfügbar ist;
- Mittel zum Informieren des Benutzers des ersten mobilen Endgeräts (100) über die Verfügbarkeit und über den Ort der Funkzugangsmöglichkeit (106) am Aufenthaltsort des zweiten mobilen Endgeräts (102), so dass sich der Benutzer des ersten mobilen Endgeräts (100) in die Nähe des Aufenthaltsorts des zweiten mobilen Endgeräts (102) begeben kann, um in den Abdeckungsbereich der Funkzugangsmöglichkeit (106) zu wechseln, wobei die Funkzugangsmöglichkeit (106) ein Hot Spot ist.

## Revendications

1. Procédé pour fournir des informations (114, 122) sur les possibilités d'accès radio (104, 106), le procédé étant exécuté par un premier terminal mobile (100), le procédé comprenant les étapes suivantes :
- collecter les premières informations (114) sur un premier ensemble de possibilités d'accès radio (104), le premier ensemble de possibilités d'accès radio comprenant les possibilités d'accès radio qui sont actuellement disponibles pour le premier terminal mobile (100) ;
- transmettre les premières informations (114) sur le premier ensemble de possibilités d'accès radio afin de fournir les premières informations (114) à d'autres terminaux mobiles ;
- recevoir les deuxièmes informations (122) sur un deuxième ensemble de possibilités d'accès radio (104, 106), le deuxième ensemble de possibilités d'accès radio comprenant les possibilités d'accès radio qui sont actuellement disponibles pour un deuxième terminal mobile (102); **caractérisé en ce que** le procédé comprend en outre les étapes suivantes :
- sélectionner une possibilité d'accès radio (106) à partir du deuxième ensemble de possibilités d'accès radio, la possibilité d'accès radio étant considérée comme une nouvelle possibilité d'accès par le premier terminal mobile (100), la possibilité d'accès radio (106) étant actuellement disponible pour le deuxième terminal mobile (102) à l'emplacement du deuxième terminal mobile (102) ;
- informer l'utilisateur du premier terminal mobile (100) à propos de la disponibilité et à propos de l'emplacement de la possibilité d'accès radio (106) à l'emplacement du deuxième terminal mobile (102) pour permettre à l'utilisateur du premier terminal mobile (100) de se repositionner à proximité de l'emplacement du deuxième terminal mobile (102) afin de se déplacer dans la zone de couverture de la possibilité d'accès radio (106), la possibilité d'accès radio (106) étant un point d'accès sans fil.

2. Procédé selon la revendication 1, comprenant en outre les étapes suivantes :
- sélectionner une possibilité d'accès radio (106) à partir du deuxième ensemble de possibilités d'accès radio (104, 106) considérée comme une nouvelle possibilité d'accès par le premier terminal mobile ;
- initier un transfert entre une possibilité d'accès radio initiale (104) et la possibilité d'accès radio (106), la possibilité d'accès radio initiale étant actuellement utilisée par le premier terminal mobile.

3. Procédé selon la revendication 1, comprenant en outre les étapes suivantes :
- envoyer les premières et/ou deuxièmes informations (114, 122) à un premier réseau de télécommunication, le premier réseau de télécommunication fournissant une possibilité d'accès initiale au premier terminal mobile ;
- demander au premier réseau de télécommunication de considérer les possibilités d'accès radio du premier et/ou du deuxième ensemble(s) de possibilités d'accès radio comme de possibles candidats pour un transfert entre la possibilité d'accès radio initiale et une possibilité d'accès radio du deuxième ensemble de possibilités d'accès radio.

4. Procédé selon la revendication 3, dans lequel les premières informations sont transmises entre le premier terminal mobile et le deuxième terminal mobile par l'intermédiaire d'une liaison directe, et/ou dans lequel les deuxièmes informations sont reçues par le premier terminal mobile à partir du deuxième terminal mobile par l'intermédiaire de la liaison, et/ou dans lequel les premières informations sont transmises au premier réseau de télécommunication, dans lequel le premier réseau de télécommunication achemine les premières informations vers un deuxième réseau de télécommunication, dans lequel le deuxième réseau de télécommunication transmet les premières informations au deuxième terminal mobile, dans lequel le deuxième terminal mobile est desservi par le deuxième réseau de télécommunication.

5. Procédé selon la revendication 1, dans lequel les premières informations et/ou les deuxièmes informations comprennent des informations sur le type, et/ou le prix, et/ou la qualité, et/ou la puissance de transmission, et/ou l'emplacement, et/ou la qualité de service, et/ou la qualité du canal, et/ou la charge, et/ou les identifiants de chaque possibilité d'accès du premier et/ou du deuxième ensemble(s) de possibilités d'accès.

6. Terminal mobile (100), le terminal mobile étant associé à un premier terminal mobile, le premier terminal mobile comprenant :
- des moyens pour collecter les premières informations (114) sur un premier ensemble de possibilités d'accès radio, le premier ensemble de possibilités d'accès radio comprenant des possibilités d'accès radio qui sont actuellement disponibles pour le premier terminal mobile (100) ;
- des moyens pour transmettre les premières informations (114) sur le premier ensemble de possibilités d'accès radio afin de fournir les premières informations (114) au moins à un deuxième terminal mobile (102) ;
- des moyens pour recevoir les deuxièmes informations (122) sur un deuxième ensemble de possibilités d'accès radio (104, 106), le deuxième ensemble de possibilités d'accès radio comprenant les possibilités d'accès radio qui sont actuellement disponibles pour un deuxième terminal mobile (102); **caractérisé en ce que** le premier dispositif mobile comprend en outre :
- des moyens pour sélectionner une possibilité d'accès radio à partir du deuxième ensemble de possibilités d'accès radio (106), la possibilité d'accès radio étant considérée comme une nouvelle possibilité d'accès par le premier terminal mobile (100), la possibilité d'accès radio étant actuellement disponible pour le deuxième terminal mobile (102) à l'emplacement du deuxième terminal mobile (102) ;
- des moyens pour informer l'utilisateur du premier terminal mobile (100) à propos de la disponibilité et à propos de l'emplacement de la possibilité d'accès radio (106) à l'emplacement du deuxième terminal mobile (102) pour permettre à l'utilisateur du premier terminal mobile (100) de se repositionner à proximité de l'emplacement du deuxième terminal mobile (102) afin de se déplacer dans la zone de couverture de la possibilité d'accès radio (106), la possibilité d'accès radio (106) étant un point d'accès sans fil.
